**Europäisches Patentamt**

**European Patent Office**

**Office européen des brevets**

(11) Veröffentlichungsnummer: **0 394 608**

**A2**

## (12) EUROPÄISCHE PATENTANMELDUNG

(21) Anmeldenummer: **90100573.6**

(22) Anmeldetag: **12.01.90**

(51) Int. Cl.5: **F16D 69/02**

(30) Priorität: **27.04.89 DE 3913952**
**30.08.89 DE 3928703**

(43) Veröffentlichungstag der Anmeldung:
**31.10.90 Patentblatt 90/44**

(84) Benannte Vertragsstaaten:
**DE ES FR GB IT**

(71) Anmelder: **RÜTGERSWERKE
AKTIENGESELLSCHAFT
Mainzer Landstrasse 217
D-6000 Frankfurt am Main 1(DE)**

(72) Erfinder: **Pflug, Detlef Uwe
Oskar-Wachtel-Weg 17
D-4600 Dortmund 1(DE)**
Erfinder: **Koch, Wilfried
Pützweg 23
D-5060 Bergisch-Gladbach(DE)**
Erfinder: **Eckert, Armin
Mittelkamp 41
D-4355 Waltrop(DE)**

(54) **Reibmaterial.**

(57) Die Erfindung betrifft neue, asbestfreie Reibmaterialien, die als verstärkendes Material Sepiolith in Form von Kurzfasern enthalten.

EP 0 394 608 A2

## Reibmaterial

Die Erfindung betrifft ein asbestfreies Reibmaterial für Bremsen und Kupplungen, das im wesentlichen aus einem Bindemittel oder Bindemittelgemisch und verstärkendem Material besteht, wobei als verstärkendes Material ein Gemisch aus Aramidfasern, Mineralfasern und Stahlfasern verwendet wird.

Reibmaterialien für Bremsen und Kupplungen werden auch heute noch häufig unter Verwendung von Asbestfasern als Verstärkungskomponente hergestellt. Aufgrund der toxischen, wahrscheinlich sogar cancerogenen Eigenschaften von Asbestfasern und der vorhersehbaren Verknappung des Rohstoffes Asbest besteht die Notwendigkeit, diese Fasern gegen andere Stoffe auszutauschen.

Durch Einsatz anderer verstärkender Materialien wie Mineral-, Keramik-, Glas- oder organischer Fasern gelang es zwar, Asbest in Reibbelägen zu ersetzen, jedoch wurden die physikalischen Eigenschaften der Asbestbeläge meist nicht erreicht. Andererseits wurden die Anforderungen der Industrie an die Reibbeläge in bezug auf thermische und mechanische Festigkeit, Verschleißfestigkeit, Bremsverzögerung und Stabilität der Verzögerung bei steigender Temperatur der Trommel und bei steigender Geschwindigkeit immer höher, d. h. man sucht nach Reibbelägen, die den Asbestbelägen qualitativ überlegen sind.

Durch Auswahl bestimmter Fasern gelang es, Reibbeläge zu entwickeln, die in einzelnen Eigenschaften starke Verbesserungen zeigen. So erzielt man z. B. durch den Einsatz von Fasern auf Basis Aramid als Verstärkungsmaterial (EP-B 0 050 377) wesentlich günstigere Werte beim Verschleiß des Belages und der Trommel. Jedoch werden die Eigenschaften der asbesthaltigen Reibmaterialien nicht über das gesamte Eigenschaftsprofil erhalten.

Es bestand demnach die Aufgabe der Erfindung, ein asbestfreies Reibmaterial bereitzustellen, aus dem sich Reibbeläge herstellen lassen, deren Gesamt-Eigenschaftsprofil dem der asbesthaltigen Eigenschaften identisch und möglichst sogar verbessert ist.

Diese Aufgabe wird durch die Merkmale der Ansprüche 1 bis 4 gelöst.

Es wurde gefunden, daß durch Verwendung von Kurzfasern aus Sepiolith als Verstärkungsmittel in Reibmaterialmischungen die Eigenschaften asbesthaltiger Reibmaterialien durchweg erhalten werden.

Sepiolith ist ein silikatisches, natürliches Mineral mit einem faserigen Habitus. Es kann in Form von Kurzfasern, d. h. mit Faserlängen bis zu 15 mm hergestellt werden. Derartige Fasern finden bislang Verwendung als Adsorptionsmittel oder Trägermaterial für Katalysatoren.

Überraschenderweise eignen sich diese Sepiolith-Kurzfasern als Verstärkungsmaterial in Reibmaterial , wobei sowohl gute Bremswerte erhalten werden als auch die Formbeständigkeit der Reibmaterialmischungen z. B. beim Vorformen oder Kaltpressen verbessert werden. Außerdem wird die Entmischungsneigung der physikalisch stark unterschiedlichen Rohstoffe einer Reibbelagmasse stark vermindert. Durch die gute Stabilisierung der Mischung bei niedrigem Schüttgewicht wird das Vorformen und Pressen vereinfacht. Entsprechende Massen können sowohl kalt als auch heiß verpreßt werden.

Sepiolith kann alleine oder zusammen mit anderem verstärkendem Material eingesetzt werden, wobei 5 bis 70 Gew.-%, an verstärkendem Material insgesamt eingesetzt werden und der Gehalt an Sepiolith im Bereich von 1,5 bis 50 Gew.-%, jeweils bezogen auf die Gesamtmischung, liegt.

Die restlichen Anteile dieser Reibmaterialien sind 5 bis 25 Gew.-% aushärtbare Bindemittel oder Bindemittelgemische, insbesondere Phenolharz sowie weitere Zusatzmittel.

Bevorzugte weitere Zusatzstoffe sind Graphit, Aluminiumoxid und andere an sich bekannte Reibstützer, die insbesondere den Reibwert bei höherer Temperatur erhöhen.

Beispiel

Alle Prozentangaben sind Angaben in Gewichtsprozenten.
Bei einer Reibbelagmasse der folgenden Zusammensetzung

| Phenolharz/Hexamethylentetramin (10:1) | 15 % |
|---|---|
| Graphit | 20 % |
| Aluminiumoxid | 5 % |
| Schwerspat | 25 % |
| Messingspäne | 15 % |
| Faser bzw. Faserkombination | 20 % |

werden folgende Fasern bzw. Faserkombinationen eingesetzt:

    1. 100 % Asbestfaser

    2. 70 % Diabasfaser,

30 % Aramidfaser

    3. 100 % Sepiolith

    4. 50 % Sepiolith,

35 % Diabasfaser,

15 % Aramidfaser

Die erhaltenen Reibbelagmassen und die daraus nach üblichen Verfahren hergestellten Reibkörper werden nach folgenden Kriterien beurteilt:

Formbeständigkeit des Rohlings (vor der Härtung)

Begutachtung durch den verarbeitenden Fachmann

Bearbeitung des gehärteten Rohlings

Begutachtung durch den verarbeitenden Fachmann

Betriebswert

Mittelwert aus 24 Messungen unter verschiedenen Bedingungen (Krauss Prüfstand)

Reibwertkonstanz im Temperaturbereich von 50 bis 300 $^\circ$ C

Belagverschleiß

Verschleiß nach Praxiserprobung

Scheibenverschleiß

Verschleiß nach Praxiserprobung

Es werden folgende Ergebnisse erzielt:

| | 1) | 2) | 3) | 4) |
|---|---|---|---|---|
| Formbeständikeit des Rohlings | gut(2) | befriedigend(3) | gut(2) | gut + (1-2) |
| Bearbeitung | gut(2) | befriedigend(3) | gut(2) | gut(2) |
| Betriebsreibwert | 0,40 | 0,42 | 0,38 | 0,40 |
| Reibwertkonstanz Über Temperatur | befriedigend | befriedigend + (2-3) | gut(2) | gut(2) |
| Belagverschleiß | befriedigend | gut(2) | gut + (1-2) | gut(2) |
| Scheibenverschleiß | befriedigend | befriedigend + (2-3) | gut | gut |

**Ansprüche**

1. Verwendung von Sepiolith als Kurzfasern in Reibmaterial-Mischungen.

2. Reibmaterial für Bremsen und Kupplungen, **dadurch gekennzeichnet**, daß es Sepiolith in Form von Kurzfasern enthält.

3. Reibmaterial für Bremsen und Kupplungen, bestehend aus 5 bis 25 Gew.-% aushärtbarem Bindemittel oder Bindemittelgemisch, 5 bis 70 Gew.-% verstärkendem Material sowie anderen Zusatzstoffen, **dadurch gekennzeichnet**, daß es 1,5 bis 50 Gew.-% Sepiolith in Form von Kurzfasern enthält.

4. Reibmaterial nach den Ansprüchen 2 und 3, **dadurch gekennzeichnet**, daß es Graphit, Aluminiumoxid und/oder andere Reibstützer enthält.